# EUROPÄISCHE PATENTSCHRIFT

(11) **EP 3 715 148 B1**
(45) Veröffentlichungstag und Bekanntmachung des Hinweises auf die Patenterteilung: **12.01.2022**
(21) Anmeldenummer: 20155054.8
(22) Anmeldetag: 03.02.2020
(51) Int. Cl.: B60C 11/11, B60C 11/03, B60C 11/12

(54) **FAHRZEUGLUFTREIFEN**
PNEUMATIC TYRE
PNEUMATIQUE DE VÉHICULE

(30) Priorität: 28.03.2019 DE 102019204326
(43) Veröffentlichungstag der Anmeldung: 30.09.2020
(73) Patentinhaber: Continental Reifen Deutschland GmbH, 30165 Hannover (DE)
(72) Erfinder: Vennebörger, Martin, 30419 Hannover (DE); Schlittenhard, Jan, 30419 Hannover (DE); Bauer, Claudia, 30419 Hannover (DE)
(74) Vertreter: Continental Corporation

(56) Entgegenhaltungen:
- EP-A1- 2 857 225
- EP-A1- 3 088 212
- WO-A1-2018/225501
- DE-A1-102013 225 298
- DE-A1-102014 212 902
- DE-A1-102014 214 841
- JP-A- H02 189 203
- US-A1- 2018 333 992

## Beschreibung

Die Erfindung betrifft einen Fahrzeugluftreifen mit einem Laufstreifen mit Profilblöcken mit jeweils einem oder mehreren parallel zueinander ausgerichteten, unter einem Winkel von 0° bis zu 50° zur axialen Richtung verlaufenden, den jeweiligen Profilblock durchquerenden Einschnitt(en) mit einer Breite von 0,4 mm bis 0,8 mm und einer Tiefe von 65% bis 100% der Profiltiefe, wobei die Einschnitte die Profilblöcke in Blocksegmente gliedern, sodass jeder Profilblock zwei randseitige Blocksegmente aufweist, wobei die randseitigen Blocksegmente jeweils mit einer Anzahl von innerhalb des Blocksegmentes parallel zueinander verlaufenden, seichter als die Einschnitte ausgeführten Mikrorillen mit einer Breite und einer Tiefe von jeweils 0,1 mm bis 0,8 mm versehen sind, wobei Profilblöcke vorgesehen sind, bei welchen das eine randseitige Blocksegment ein schmales Blocksegment und das andere randseitige Blocksegment ein gegenüber dem schmalen Blocksegment breiter ausgeführtes breites Blocksegment ist.

Ein Fahrzeugluftreifen der eingangs genannten Art ist beispielsweise aus der WO 2018/225501 A1 bekannt. Gemäß einem Ausführungsbeispiel umfasst der Laufstreifen des Fahrzeugluftreifens in Draufsicht trapezförmige Profilblöcke, welche von in axialer Richtung bzw. von im Wesentlichen in axialer Richtung sowie parallel zueinander verlaufenden Einschnitten durchquert sind. Die Einschnitte weisen beispielsweise eine Tiefe von 7,0 mm und eine Breite von 0,8 mm auf und verleihen den Profilblöcken jeweils ein schmales randseitiges Blocksegment und ein gegenüber diesem breiter ausgeführtes breites Blocksegment. Sowohl im schmalen randseitigen Blocksegment als auch im breiten randseitigen Blocksegment sind in Draufsicht Mikrorillen mit einer Breite und einer Tiefe von jeweils 0,1 mm bis 0,8 mm ausgebildet, wobei sämtliche in einem Profilblock ausgebildete Mikrorillen in Draufsicht gerade und parallel zueinander verlaufen.

Ferner ist aus der DE 10 2013 225 298 A1 ein Fahrzeugluftreifen mit einem Laufstreifen mit Profilblöcken bekannt, wobei sämtliche Profilblöcke des Laufstreifens sind mit einer großen Anzahl von Mikrorillen überzogen sind, die auch Schnitt- und Kreuzungsstellen zu den Einschnitten aufweisen. Die Einschnitte weisen eine Breite von 0,4 mm bis 0,6 mm, die Mikrorillen weisen eine Breite und eine Tiefe von jeweils 0,2 mm bis 0,3 mm auf. Eine große Anzahl der Mikrorillen erstreckt sich unmittelbar bei den Einschnitten, sodass die Mikrorillen abschnittsweise mit den Einschnitten zusammenfallen. Ferner ist ein Großteil der Mikrorillen in ihrem Verlauf durch runde Freistellen unterbrochen, welche im Zuge der Vulkanisation des Reifens durch in den Formteilen der Vulkanisationsform ausgebildete Entlüftungsbohrungen gebildet wurden.

Die durch Mikrorillen gebildeten oberflächlichen Strukturen am Laufstreifen tragen bei neuem Reifen dazu bei, die Griffeigenschaften auf mit schnee- und/oder eisbedeckten Fahrbahnen zu verbessern, wobei sich der beim Bremsen und beim Beschleunigen auf schnee- und/oder eisbedeckten Fahrbahnen bildende Wasserfilm von der Oberfläche der Profilblöcke über die Mikrorillen schnell ableiten lässt. Die Mikrorillen stellen ferner Griffkanten zur Verfügung, welche die Griff-, Traktions- und Bremseigenschaften des Fahrzeugluftreifens unter winterlichen Fahrbedingungen verbessern.

Der Erfindung liegt die Aufgabe zugrunde, bei einem Fahrzeugluftreifen der eingangs genannten Art die Wirkung der Mikrorillen, insbesondere im Hinblick auf die Griff-, Traktions- und Bremseigenschaften des Reifens, weiter zu verbessern.

Gelöst wird die gestellte Aufgabe erfindungsgemäß dadurch, dass die Mikrorillen in den schmalen Blocksegmenten - relativ zur Mittelinie des bzw. jedes im selben Profilblock verlaufenden Einschnittes - unter einem Winkel von 50° bis 90° und die Mikrorillen in den breiten Blocksegmenten - relativ zur Mittelinie des bzw. jedes im selben Profilblock verlaufenden Einschnittes - unter einem Winkel von 0° bis 35° verlaufen.

Gemäß der Erfindung weisen diese Profilblöcke daher jeweils ein schmales und ein breites Blocksegment auf, in welchen die Mikrorillen unterschiedlich orientiert sind. In den breiten Blocksegmenten sind die Mikrorillen unter einem Winkel von 0° bis 35° zur Mittellinie der Einschnitte orientiert, sodass sie "lateral" (in axialer Richtung) verlaufende Mikrorillen sind. Die breiten Blocksegmente weisen eine vergleichsweise hohe Umfangssteifigkeit auf, verbiegen sich daher unter Brems- bzw. Traktionsbelastung nur wenig. Die lateral verlaufenden Mikrorillen bleiben daher unter Brems- bzw. Traktionsbelastung in Kontakt mit der Fahrbahn und verbessern bei neuem Reifen die Griffeigenschaften in Umfangsrichtung. In den schmalen Blocksegmenten sind die Mikrorillen unter einem Winkel von 50° bis 90° zur Mittellinie der Einschnitte orientiert und verlaufen daher "longitudinal", somit in Umfangsrichtung. Die schmalen Blocksegmente weisen - gegenüber den breiten Blocksegmenten - eine geringere Umfangssteifigkeit auf, sind jedoch in lateraler (axialer) Richtung relativ steif. Die longitudinal verlaufenden Mikrorillen in den schmalen Blocksegmenten stellen daher unter lateraler Belastung Griffkanten zur Verfügung und tragen somit zu einer Verbesserung der Griffeigenschaften in lateraler Richtung, also beispielsweise bei Kurvenfahrt, bei. Erfindungsgemäß ist somit der "Mikrorillentyp" (lateral bzw. longitudinal verlaufende Mikrorillen) auf erwünschte und vorteilhafte Weise auf die Steifigkeit der Blocksegmente angepasst, wodurch die mittels der Mikrorillen erzielbaren Effekte gegenüber den auf bekannte Weise orientierten Mikrorillen deutlich verstärkt sind.

Es ist bevorzugt, wenn sämtliche Mikrorillen kreuzungsfrei zu den Einschnitten verlaufen. Dadurch lassen sich die Mikrorillen nach der Vulkanisation des Reifens besonders gut ausformen, sodass sie ihre vorteilhaften Effekte gut entfalten können. Da die Kanten der Einschnitte durch die Mikrorillen nicht unterbrochen sind, stehen, vor allem bei neuem Reifen, die Einschnittkanten über ihre gesamte Länge als Griffkanten zur Verfügung.

Gemäß einer bevorzugten Ausführungsvariante weisen innerhalb eines breiten Blocksegmentes nebeneinander verlaufende Mikrorillen voneinander einen Abstand auf, welcher kleiner ist als der Abstand, welcher innerhalb eines schmalen Blocksegmentes nebeneinander verlaufende Mikrorillen voneinander aufweisen. Die lateralen Mikrorillen in den breiten Blocksegmenten sind daher "dichter" ausgebildet als die longitudinalen Mikrorillen in den schmalen Blocksegmenten. Insbesondere bleibt bei dieser Variante bei neuem Reifen auch eine große "Nettokontaktfläche" des Laufstreifens erhalten.

Bevorzugter Weise beträgt der Abstand, welchen innerhalb eines breiten Blocksegmentes nebeneinander verlaufende Mikrorillen voneinander aufweisen, 0,7 mm bis 1,5 mm. Ferner ist es bevorzugt, wenn der Abstand, welchen innerhalb eines schmalen Blocksegmentes nebeneinander verlaufende Mikrorillen voneinander aufweisen, 3,0 mm bis 6,0 mm beträgt.

Gemäß einer weiteren bevorzugten Ausführungsvariante sind Mikrorillen vorgesehen, welche innerhalb eines breiten Blocksegmentes parallel zur Mittelinie des bzw. jedes im selben Profilblock verlaufenden Einschnittes verlaufen und das Blocksegment durchqueren. Gemäß einer weiteren bevorzugten Ausführungsvariante sind Mikrorillen vorgesehen, welche innerhalb eines breiten Blocksegmentes eines mittleren Profilblockes unter einem Winkel von 10° bis 30° zur Mittelinie des bzw. jedes im selben Profilblock verlaufenden Einschnittes verlaufen. Durch diese Maßnahmen lässt sich die relative Orientierung der Mikrorillen zum Einschnitt auf vorteilhafte Weise an die jeweilige Blockgeometrie, also an die "Blockform", anpassen, wodurch sich die Wirkung der Mikrorillen weiter verbessern lässt.

Ferner ist es bevorzugt, wenn Mikrorillen vorgesehen sind, welche innerhalb eines schmalen Blocksegmentes verlaufen und in einem Mindestabstand von mindestens 0,5 mm vor der Mittellinie des bzw. eines im selben Profilblock verlaufenden Einschnittes enden. Diese Maßnahme ist insbesondere für die Wirkung der Einschnittkanten als Griffkanten vorteilhaft.

Gemäß einer weiteren vorteilhaften Variante sind Mikrorillen vorgesehen, welche innerhalb eines schmalen Blocksegmentes eines schulterseitigen Profilblockes relativ zur Mittellinie des bzw. jedes im selben Profilblock verlaufenden Einschnittes unter einem Winkel von 50° bis 60°, insbesondere von 52° bis 58°, verlaufen. In schulterseitigen Profilblöcken, welche üblicherweise in bzw. im Wesentlichen in axialer Richtung langgestreckt sind, sind die Griffkanten, welche von derart orientierten longitudinalen Mikrorillen zur Verfügung gestellt sind, bei lateraler Belastung besonders vorteilhaft.

Gemäß einer weiteren bevorzugten Ausführungsvariante sind Mikrorillen vorgesehen, welche innerhalb eines schmalen Blocksegmentes eines mittleren Profilblockes relativ zur Mittelinie des bzw. jedes im selben Profilblock verlaufenden Einschnittes unter einem Winkel von 75° bis 90°, insbesondere von 80° bis 90°, verlaufen. Solche Mikrobiellen sind auf vorteilhafte Weise auf die üblichen Blockformen mittlerer Profilblöcke angepasst.

Eine weitere bevorzugte Ausführungsvariante ist dadurch gekennzeichnet, dass in breiten Blocksegmenten zwischen benachbart verlaufenden Mikrorillen zumindest ein, insbesondere zumindest zwei, hintereinander angeordnete, innerhalb des breiten Blocksegmentes endende(r) Einschnitt(e) mit einer Tiefe von 65% bis 100% der Profiltiefe ausgebildet ist bzw. sind. Durch solche Einschnitte lässt sich die Umfangssteifigkeit der breiten Blocksegmente senken, wodurch deren Biegeverhalten unter Brems- bzw. Traktionsbelastung auf eine für die Wirksamkeit der Mikrorillen vorteilhafte Weise verbessert ist.

Besonders günstig ist es dabei, wenn sich der bzw. die innerhalb des breiten Blocksegmentes endende(n) Einschnitt(e) aus einem mittleren Abschnitt mit einer konstanten Breite von 0,4 mm bis 0,8 mm und zwei randseitigen Abschnitten mit einer zum jeweiligen freien Ende zunehmenden Breite zusammensetzen, wobei die Breite der randseitigen Abschnitte an ihrer breitesten Stelle insbesondere 150% bis 300% der Breite des mittleren Abschnittes beträgt.

Die Mikrorillen verlaufen in Draufsicht vorzugsweise gerade oder zumindest abschnittsweise wellen- oder zickzackförmig. Über gerade Mikrorillen lässt sich sehr wirkungsvoll Wasser ableiten, wellen- oder zickzackförmig Mikrorillen sind vor allem für die Griffeigenschaften vorteilhaft.

Gemäß einer weiteren bevorzugten Ausführungsvariante weist der Fahrzeugluftreifen einen laufrichtungsgebunden ausgeführten Laufstreifen auf, wobei beim Abrollen des Reifens bei Vorwärtsfahrt das randseitige, breite Blocksegment vor dem randseitigen, schmalen Blocksegment in den Untergrund eintritt. Bei einer solchen laufrichtungsgebundenen Ausführung sind die die Brems- und Traktionseigenschaften des Reifens besonders effektiv verbessert.

Bei einem Fahrzeugluftreifen mit einem Laufstreifen mit Profilblöcken mit zumindest zwei parallel zueinander verlaufenden, den jeweiligen Profilblock durchquerenden Einschnitten ist es von Vorteil, wenn das zwischen zwei durchquerenden Einschnitten befindliche Blocksegment mit Mikrorillen versehen ist, welche in Draufsicht parallel zur Mittelinie des bzw. jedes im selben Profilblock verlaufenden Einschnittes verlaufen.

Weitere Merkmale, Vorteile und Einzelheiten der Erfindung werden nun anhand der Zeichnung die schematisch Ausführungsbeispiele der Erfindung zeigt, näher beschrieben. Dabei zeigen
Fig. 1 eine Draufsicht auf zwei Profilblöcke eines Laufstreifens eines Fahrzeugluftreifens mit einer ersten Ausführungsvariante der Erfindung,
Fig. 2 eine Draufsicht auf einen Profilblock mit einer zweiten Ausführungsvariante der Erfindung,
Fig. 3 eine Draufsicht auf einen Profilblock mit einer dritten Ausführungsvariante der Erfindung und
Fig. 4 eine Draufsicht auf einen Profilblock mit einer vierten Ausführungsvariante der Erfindung.

Gemäß der Erfindung ausgeführte Fahrzeugluftreifens sind Reifen in Radialbauart, insbesondere für Personenkraftwagen, Vans oder Light-Trucks, wobei die Reifen zum Fahren unter winterlichen Fahrbedingungen besonders gut geeignet sind.

Die Erfindung befasst sich mit zu einem Laufstreifen eines Fahrzeugluftreifens gehörenden Profilblöcken, welche auf spezielle Weise mit Einschnitten und Mikrorillen versehen sind. Die Einschnitte weisen eine Breite von 0,4 mm bis 0,8 mm und in radialer Richtung eine Tiefe von 65% bis 100% der jeweiligen Profiltiefe auf. Die Mikrorillen sind seichter ausgeführt als die Einschnitte und weisen eine Breite und eine Tiefe von jeweils 0,1 mm bis 0,8 mm auf.

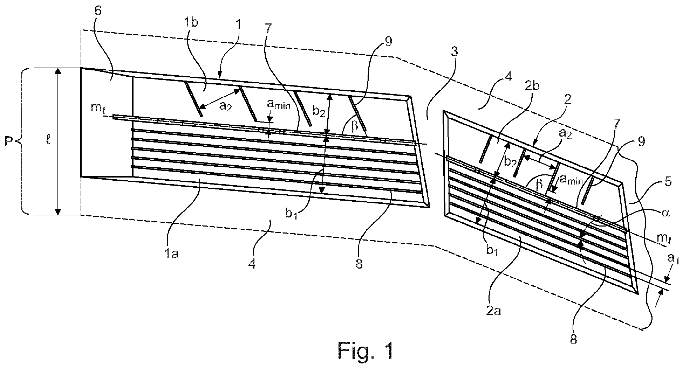

Fig. 1 zeigt von einem Laufstreifen eines Fahrzeugluftreifens einen schulterseitigen Profilblock 1 und einen mittleren Profilblock 2, welche in den beiden Umfangsrichtungen jeweils gemeinsam durch in Fig. 1 lediglich andeutete Rillen 4 von weiteren in Fig. 1 nicht gezeigten Profilblöcken 1, 2 getrennt sind.

Die Profilstrukturen des Laufstreifens sind, insbesondere in bekannter Weise, innerhalb einer Pitchfolge mit Pitches unterschiedlicher Pitchlängen (Umfangslängen) angeordnet. Der schulterseitige Profilblock 1 und der mittlere Profilblock 2 gehören mitsamt einer der Rillen 4, bei der gezeigten Variante exemplarisch mit der in Fig. 1 unterhalb der Profilblöcke 1, 2 verlaufenden Rille 4, zu einem Pitch P mit einer Umfangslänge 1 von beispielsweise zirka 15,0 mm.

Die Profilblöcke 1, 2 sind voneinander durch eine in die Rillen 4 einmündende Rille 3 getrennt. Ferner ist der mittlere Profilblock 2 laufstreifeninnenseitig durch eine in die Rillen 4 einmündende Rille 5 begrenzt. Vorzugsweise sind die Rillen 3, 4, 5 auf die für den jeweiligen Fahrzeugluftreifen vorgesehen Profiltiefe ausgeführt, welche für Personenkraftwagen, Vans oder Light-Trucks üblicherweise 6,5 mm bis 13,0 mm beträgt.

Der schulterseitige Profilblock 1 und der mittlere Profilblock 2 sind jeweils mit einem den Profilblock 1, 2 durchquerenden Einschnitt 7 versehen, welcher in Draufsicht gerade sowie parallel zur Erstreckungsrichtung der Rillen 4 verläuft. Die in Erstreckungsrichtung der Einschnitte 7 verlaufende Mittellinien m₁ sind gestrichelt eingezeichnet. Der den schulterseitigen Profilblock 1 durchquerende Einschnitt 7 mündet in die die Profilblöcke 1, 2 voneinander trennende Rille 3 und tritt außerhalb der Bodenaufstandsfläche aus einer den schulterseitigen Profilblock 1 begrenzenden, zur nicht gezeigten Seitenwand verlaufenden Schulterflanke 6 aus. Der den mittleren Profilblock 2 durchquerende Einschnitt 7 mündet in die die Profilblöcke 1, 2 voneinander trennende Rille 3 und die den mittleren Profilblock 2 laufstreifeninnenseitig begrenzende Rille 5 ein.

Der den schulterseitigen Profilblock 1 durchquerende Einschnitt 7 teilt diesen in zwei randseitige Blocksegmente 1a, 1b, der den mittleren Profilblock 2 durchquerende Einschnitt 7 teilt diesen in randseitige Blocksegmente 2a, 2b, wobei die Blocksegmente 1a, 2a an die eine Rille 4 und die Blocksegmente 1b, 2b an die andere Rille 4 angrenzen. Die Blocksegmente 1a, 2a weisen jeweils eine senkrecht sowie bezogen auf Mittellinie m₁ des Einschnittes 7 ermittelte Breite b₁, die Blocksegmente 1b, 2b weisen eine auf analoge Weise ermittelte Breite b₂ auf, wobei die Breite b₁ größer ist als die Breite b₂ und wobei die Breiten b₁, b₂ beim gezeigten Ausführungsbeispiel im Wesentlichen konstant sind. Nachfolgend werden die Blocksegmente 1a, 2a als breite Blocksegmente und die Blocksegmente 1b, 2b als schmale Blocksegmente bezeichnet.

Jedes breite Blocksegment 1a, 2a ist mit einer Anzahl von Mikrorillen 8 versehen, welche innerhalb des Blocksegmentes 1a, 2a in Draufsicht parallel zum durchquerenden Einschnitt 7, daher relativ zur Mittellinie m₁ des Einschnittes 7 unter einem Winkel α von 0° verlaufen, und über die Breite b₁ des Blocksegmentes 1a, 2a gleichmäßig verteilt sind. Die im Blocksegment 2a verlaufenden Mikrorillen 8 münden in die Rillen 3 und 5 ein und die im Blocksegment 1a verlaufenden Mikrorillen 8 münden in die Rille 3 ein und treten an der Schulterflanke 6 aus. Die Mikrorillen 8 durchqueren daher das jeweilige breite Blocksegment 1a, 2a. Die Anzahl der Mikrorillen 8 ist derart gewählt, dass einander benachbarte Mikrorillen 8 übereinstimmende gegenseitige Abstände a₁ von 0,7 mm bis 1,5 mm zueinander aufweisen, wobei beim gezeigten Ausführungsbeispiel in jedem breiten Blocksegment 1a, 2a fünf Mikrorillen 8 vorgesehen sind.

Die schmalen Blocksegmente 1b, 2b sind jeweils mit einer Anzahl von Mikrorillen 9 versehen, welche innerhalb des Blocksegmentes 1b, 2b in Draufsicht parallel zueinander sowie relativ zur Mittellinie m₁ des jeweiligen Einschnittes 7 unter einem Winkel β von 50° bis 90° verlaufen, vor der Mittellinie m₁ des Einschnittes 7 in einem Mindestabstand aₘᵢₙ von mindestens 0,5 mm enden und in die an das Blocksegment 1b, 2b angrenzende Rille 4 einmünden. Vorzugsweise beträgt der Winkel β der Mikrorillen 9, welche im schmalen Blocksegment 1b des schulterseitigen Profilblockes 1 verlaufen, 50° bis 60°, insbesondere 52° bis 58°, wobei der Winkel β der Mikrorillen 9 im Blocksegment 1b beim gezeigten Ausfuhrungsbeispiel ca. 55° beträgt. Beim gezeigten Ausführungsbeispiel sind die Mikrorillen 9 im schmalen Blocksegment 1b des schulterseitigen Profilblockes 1 ferner derart orientiert, dass die Enden der Mikrorillen 9, welche sich näher zum durchquerenden Einschnitt 7 befinden, weiter laufstreifeninnenseitig liegen als ihre zweiten Enden. Der Winkel β der Mikrorillen 9, welche im schmalen Blocksegment 2b des mittleren Profilblockes 2 verlaufen, beträgt insbesondere 75° bis 90°, vorzugsweise 80° bis 90°, beim gezeigten Ausführungsbeispiel zirka 90°. Die Anzahl der Mikrorillen 9 ist derart gewählt, dass einander innerhalb eines Blocksegmentes 1b, 2b benachbarte Mikrorillen 9 übereinstimmende gegenseitige Abstände a₂ von 3,0 mm bis 6,0 mm aufweisen, wobei beim gezeigten Ausführungsbeispiel in jedem breiten Blocksegment 1a, 2a vier Mikrorillen 9 vorgesehen sind.

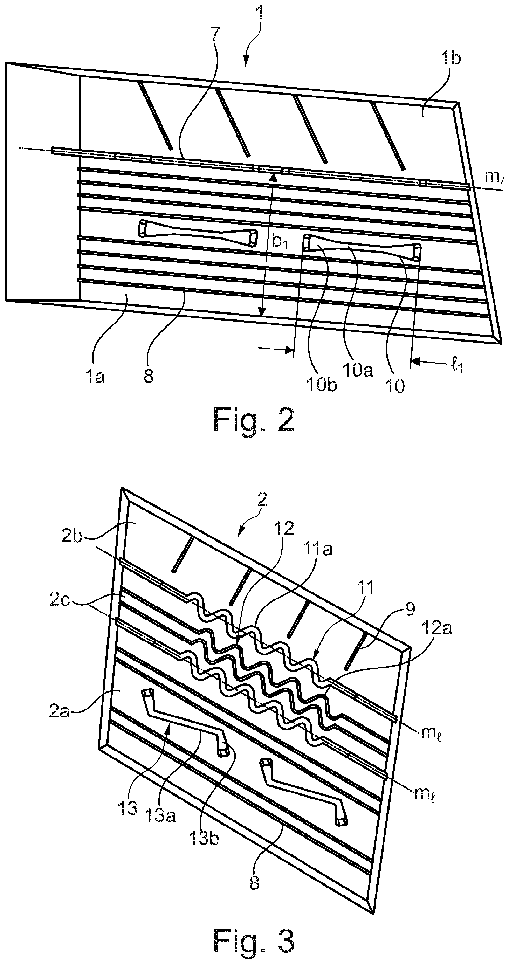

Fig. 2 zeigt eine Variante eines schulterseitigen Profilblockes 1. Das schmale Blocksegment 1b des Profilbockes 1 ist analog zur Variante gemäß Fig. 1 ausgeführt. Das breite Blocksegment 1a ist mit zwei sich parallel zum durchquerenden Einschnitt 7 erstreckenden, hintereinander angeordneten und innerhalb des Blocksegmentes 1a endenden Einschnitten 10 versehen, welche bezogen auf die Breite b₁ des Blocksegmentes 1a zumindest im Wesentlichen in der Mitte des Blocksegmentes 1a ausgebildet sind und voneinander einen Abstand von 2,0 mm bis 10,0 mm aufweisen.

Jeder Einschnitt 10 weist eine Erstreckungslänge l₁ von insbesondere 8,0 mm bis 15,0 mm und in radialer Richtung eine Tiefe von 65% bis 100% der Profiltiefe aufweist. Jeder Einschnitt 10 weist in Draufsicht im Wesentlichen die Form eines "Doppelpaddels" auf und setzt sich aus einem mittleren Abschnitt 10a mit einer konstanten Breite von 0,4 mm bis 0,8 mm und zwei randseitigen Abschnitten 10b mit einer zum jeweiligen freien Ende zunehmenden Breite zusammen. Die randseitigen Abschnitte 10b weisen an ihrer breitesten Stelle eine Breite auf, welche insbesondere 150% bis 300% der Breite des mittleren Abschnittes 10a beträgt. An jeder Seite der beiden Einschnitte 10 sind im breiten Blocksegment 1a drei gleichmäßig verteilte, parallel zum durchquerenden Einschnitt 7 verlaufende, durchquerende Mikrorillen 8 ausgebildet.

Die mittleren Profilblöcke können auf analoge Weise zu der in Fig. 2 gezeigten Variante mit Einschnitten und Mikrorillen versehen sein.

Fig. 3 zeigt eine Variante eines mittleren Profilblockes 2, welcher mit zwei durchquerenden Einschnitten 11 mit jeweils einem in Draufsicht wellenförmig verlaufenden mittleren Abschnitt 11a versehen ist. Die in Erstreckungsrichtung der Einschnitte 11 ausgerichteten Mittellinien m₁ sind gestrichelt eingezeichnet. Die durchquerenden Einschnitte 11 teilen den Profilblock 2 in ein zwischen den durchquerenden Einschnitten 11 befindliches mittleres Blocksegment 2c, ein randseitiges breites Blocksegment 2a und ein randseitiges schmales Blocksegment 2b. Das schmale Blocksegment 2b ist mit vier Mikrorillen 9, das mittlere Blocksegment 2c ist mit zwei Mikrorillen 12 mit in Draufsicht wellenförmig verlaufenden mittleren Abschnitten 12a versehen, wobei die Mikrorillen 12 im Wesentlichen parallel zu den Einschnitten 11 verlaufen. Im breiten Blocksegment 2a sind innerhalb des Blocksegmentes 2a endende, sich parallel den zu durchquerenden Einschnitten 11 erstreckende Einschnitte 13 ausgebildet, welche derart hintereinander angeordnet sind, dass der eine Einschnitt 13 in Fortsetzung der Erstreckungsrichtung des anderen Einschnittes 13 verläuft. Jeder Einschnitt 13 setzt sich derart in Draufsicht aus einem gerade verlaufenden mittleren Abschnitt 13a und zwei randseitigen Abschnitten 13b zusammen, sodass er in Draufsicht insgesamt Z-artig verläuft, wobei der zentralen Abschnitt 13a mit den randseitigen Abschnitten 13b einen stumpfen Winkel einschließt. An jeder Seite der beiden Einschnitte 13 sind im Blocksegment 2a zwei gleichmäßig verteilte, parallel zu den Einschnitten 11, 13 verlaufende, durchquerende Mikrorillen 8 ausgebildet.

Die schulterseitigen Profilblöcke können auf analoge Weise zu der in Fig. 2 gezeigten Variante mit Einschnitten und Mikrorillen versehen sein.

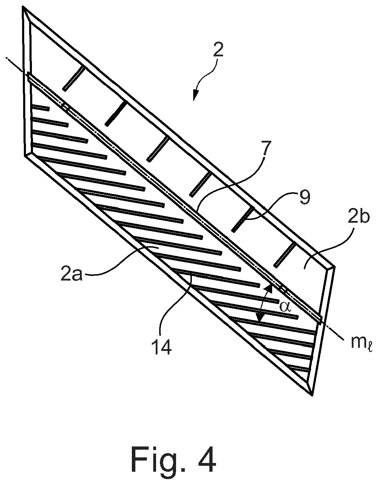

Fig. 4 zeigt eine weitere Variante eines mittleren Profilblockes 2, welcher mit einem gerade verlaufenden, in Längserstreckung des Profilblockes 2 ausgerichteten, durchquerenden Einschnitt 7 versehen ist, der den Profilblock 2 in ein breites Blocksegment 2a und ein schmales Blocksegment 2b teilt. Das schmale Blocksegment 2b ist auf analoge Weise zu der in Fig. 1 gezeigten Variante mit Mikrorillen 9 versehen. Das breite Blocksegment 2a ist mit gerade und parallel zueinander verlaufenden Mikrorillen 14 versehen, welche unter einem Winkel α von 30° zur Mittellinie m₁ des Einschnittes 7 sowie beim gezeigten Ausführungsbeispiel ferner im Wesentlichen in axialer Richtung verlaufen und vor dem Einschnitt 7 in einem Abstand enden.

Die Erfindung ist auf die beschriebenen Ausführungsbeispiele nicht beschränkt.

Die beschriebenen Ausführungen von mittleren und schulterseitigen Profilblöcken können innerhalb eines Laufstreifens miteinander beliebig kombiniert werden. Der Winkel a, unter welchem Mikrorillen in den breiten Blocksegmenten verlaufen, beträgt grundsätzlich 0° bis 35°.

Der Laufstreifen eines erfindungsgemäßen Fahrzeugluftreifens kann laufrichtungsgebunden ausgeführt sein, wobei die Profilblöcke und die Profilierung des Laufstreifens derart gestaltet sind, dass bei am Fahrzeug montieren Fahrzeugluftreifen die Profilblöcke über ein breites Blocksegment einlaufen und über ein - gegenüber dem breiten Blocksegment schmäler ausgeführten - schmales Blocksegment auslaufen. Beim Abrollen des Reifens bei Vorwärtsfahrt tritt daher das breite Blocksegment vor dem schmalen Blocksegment in den Untergrund ein.

Die Profilblöcke können eine von der in Fig. 1 und Fig. 2 gezeigten Gestalt abweichende Gestalt aufweisen. Insbesondere können im mittleren Laufstreifenbereich in Draufsicht auf den "Spitzen" stehende deltoidartige mittlere Profilblöcke vorgesehen sein, welche durch über die Laufstreifenbreite V-förmig verlaufende Schrägrillen mitbegrenzt sind.

Die Breite eines Blocksegmentes ist jeweils senkreckt zur in Erstreckungsrichtung des Einschnittes ausgerichteten Mittellinie sowie an der breitesten Stelle des Blocksegmentes ermittelt.

### Bezugsziffernliste

- 1 ......................: schulterseitiger Profilblock
- 1a ....................: breites Blocksegment
- 1b ....................: schmales Blocksegment
- 2 ......................: mittlerer Profilbock
- 2a ....................: breites Blocksegment
- 2b ....................: schmales Blocksegment
- 2c ....................: mittleres Blocksegment
- 3 ......................: Rille
- 4 ......................: Rille
- 5 ......................: Rille
- 6 ......................: Schulterflanke
- 7 ......................: Einschnitt
- 8 ......................: Mikrorille
- 9 ......................: Mikrorille
- 10 ....................: Einschnitt
- 10a ..................: mittlerer Abschnitt
- 10b ..................: randseitiger Abschnitt
- 11 ....................: Einschnitt
- 11a ..................: mittlerer Abschnitt
- 12 ....................: Mikrorille
- 12a ..................: mittlerer Abschnitt
- 13 ....................: Einschnitt
- 13a ..................: mittlerer Abschnitt
- 13b ..................: randseitiger Abschnitt
- 14 ....................: Mikrorille
- a₁, a₂ ................: Abstand
- aₘᵢₙ ..................: Mindestabstand
- b₁, b₂ ................: Breite
- l₁ ......................: Erstreckungslänge
- m₁ ....................: Mittellinie
- P ......................: Pitch
- α, β ..................: Winkel

## Patentansprüche

1. Fahrzeugluftreifen mit einem Laufstreifen mit Profilblöcken (1, 2) mit jeweils einem oder mehreren parallel zueinander ausgerichteten, unter einem Winkel von 0° bis zu 50° zur axialen Richtung verlaufenden, den jeweiligen Profilblock (1, 2) durchquerenden Einschnitt(en) (7, 11) mit einer Breite von 0,4 mm bis 0,8 mm und einer Tiefe von 65% bis 100% der Profiltiefe,
wobei die Einschnitte (7, 11) die Profilblöcke (1, 2) in Blocksegmente (1a, 1b, 2a, 2b, 2c) gliedern, sodass jeder Profilblock (1, 2) zwei randseitige Blocksegmente (1a, 1b, 2a, 2b) aufweist,
wobei die randseitigen Blocksegmente (1a, 1b, 2a, 2b) jeweils mit einer Anzahl von innerhalb des Blocksegmentes (1a, 2a, 1b, 2b) parallel zueinander verlaufenden, seichter als die Einschnitte (7, 11) ausgeführten Mikrorillen (8, 9, 12, 14) mit einer Breite und einer Tiefe von jeweils 0,1 mm bis 0,8 mm versehen sind,
wobei Profilblöcke (1, 2) vorgesehen sind, bei welchen das eine randseitige Blocksegment (1b, 2b) ein schmales Blocksegment (1b, 2b) und das andere randseitige Blocksegment (1a, 2a) ein gegenüber dem schmalen Blocksegment (1b, 2b) breiter ausgeführtes breites Blocksegment (1a, 2a) ist,
**dadurch gekennzeichnet,**
**dass** die Mikrorillen (9) in den schmalen Blocksegmenten (1b, 2b) - relativ zur Mittelinie (m₁) des bzw. jedes im selben Profilblock (1, 2) verlaufenden Einschnittes (7, 11) - unter einem Winkel (β) von 50° bis 90° und die Mikrorillen (8, 12, 14) in den breiten Blocksegmenten (1b, 2b) - relativ zur Mittelinie (m₁) des bzw. jedes im selben Profilblock (1, 2) verlaufenden Einschnittes (7, 11) - unter einem Winkel (α) von 0° bis 35° verlaufen.

2. Fahrzeugluftreifen nach Anspruch 1, **dadurch gekennzeichnet, dass** sämtliche Mikrorillen (8, 9, 12, 14) kreuzungsfrei zu den Einschnitten (7, 11) verlaufen.

3. Fahrzeugluftreifen nach Anspruch 1 oder 2, **dadurch gekennzeichnet, dass** innerhalb eines breiten Blocksegmentes (1a, 2a) nebeneinander verlaufende Mikrorillen (8, 14) voneinander einen Abstand (a₁) aufweisen, welcher kleiner ist als der Abstand (a₂), welcher innerhalb eines schmalen Blocksegmentes (1b, 2b) nebeneinander verlaufende Mikrorillen (9) voneinander aufweisen.

4. Fahrzeugluftreifen nach Anspruch 3, **dadurch gekennzeichnet, dass** der Abstand (a₁), welchen innerhalb eines breiten Blocksegmentes (1a, 2a) nebeneinander verlaufende Mikrorillen (8, 14) voneinander aufweisen, 0,7 mm bis 1,5 mm beträgt.

5. Fahrzeugluftreifen nach Anspruch 3, **dadurch gekennzeichnet, dass** der Abstand (a₂), welchen innerhalb eines schmalen Blocksegmentes (1b, 2b) nebeneinander verlaufende Mikrorillen (9, 12) voneinander aufweisen, 3,0 mm bis 6,0 mm beträgt.

6. Fahrzeugluftreifen nach einem der Ansprüche 1 bis 5, **dadurch gekennzeichnet, dass** Mikrorillen (8) vorgesehen sind, welche innerhalb eines breiten Blocksegmentes (1a, 2a) parallel zur Mittelinie (m₁) des bzw. jedes im selben Profilblock (1, 2) verlaufenden Einschnittes (7, 11) verlaufen und das Blocksegment (1a, 2a) durchqueren.

7. Fahrzeugluftreifen nach einem der Ansprüche 1 bis 6, **dadurch gekennzeichnet, dass** Mikrorillen (14) vorgesehen sind, welche innerhalb eines breiten Blocksegmentes (2a) eines mittleren Profilblockes (2) unter einem Winkel (α) von 10° bis 30° zur Mittelinie (m₁) des bzw. jedes im selben Profilblock (1, 2) verlaufenden Einschnittes (7) verlaufen.

8. Fahrzeugluftreifen nach einem der Ansprüche 1 bis 7, **dadurch gekennzeichnet, dass** Mikrorillen (9) vorgesehen sind, welche innerhalb eines schmalen Blocksegmentes (1b, 2b) verlaufen und in einem Mindestabstand (aₘᵢₙ) von mindestens 0,5 mm vor der Mittellinie (m₁) des bzw. eines im selben Profilblock (1, 2) verlaufenden Einschnittes (7) enden.

9. Fahrzeugluftreifen nach einem der Ansprüche 1 bis 8, **dadurch gekennzeichnet, dass** Mikrorillen (9) vorgesehen sind, welche innerhalb eines schmalen Blocksegmentes (1b) eines schulterseitigen Profilblockes (1) relativ zur Mittellinie (m₁) des bzw. jedes im selben Profilblock verlaufenden Einschnittes (7) unter einem Winkel (β) von 50° bis 60°, insbesondere von 52° bis 58°, verlaufen.

10. Fahrzeugluftreifen nach einem der Ansprüche 1 bis 9, **dadurch gekennzeichnet, dass** Mikrorillen (9) vorgesehen sind, welche innerhalb eines schmalen Blocksegmentes (2b) eines mittleren Profilblockes (2) relativ zur Mittelinie (m₁) des bzw. jedes im selben Profilblock (2) verlaufenden Einschnittes (7) unter einem Winkel (β) von 75° bis 90°, insbesondere von 80° bis 90°, verlaufen.

11. Fahrzeugluftreifen nach einem der Ansprüche 1 bis 10, **dadurch gekennzeichnet, dass** in breiten Blocksegmenten (1a, 2a) zwischen benachbart verlaufenden Mikrorillen (8) zumindest ein, insbesondere zumindest zwei hintereinander angeordnete, innerhalb des breiten Blocksegmentes (1a, 2a) endende(r) Einschnitt(e) (10, 13) mit einer Tiefe von 65% bis 100% der Profiltiefe ausgebildet ist bzw. sind.

12. Fahrzeugluftreifen nach Anspruch 11, **dadurch gekennzeichnet, dass** sich der bzw. die innerhalb des breiten Blocksegmentes (1a, 2a) endende(n) Einschnitt(e) (10, 13) aus einem mittleren Abschnitt (10a, 13a) mit einer konstanten Breite von 0,4 mm bis 0,8 mm und zwei randseitigen Abschnitten (10b, 13b) mit einer zum jeweiligen freien Ende zunehmenden Breite zusammensetzen, wobei die Breite der randseitigen Abschnitte (10b, 13b) an ihrer breitesten Stelle insbesondere 150% bis 300% der Breite des mittleren Abschnittes (10a, 13a) beträgt.

13. Fahrzeugluftreifen nach einem der Ansprüche 1 bis 12, **dadurch gekennzeichnet, dass** die Mikrorillen (8, 9, 12, 14) in Draufsicht gerade oder zumindest abschnittsweise wellen- oder zickzackförmig verlaufen.

14. Fahrzeugluftreifen nach einem der Ansprüche 1 bis 13, **dadurch gekennzeichnet, dass** der Laufstreifen laufrichtungsgebunden ausgeführt ist, wobei beim Abrollen des Reifens bei Vorwärtsfahrt das randseitige, breite Blocksegment (1a, 2a) vor dem randseitigen, schmalen Blocksegment (1b, 2b) in den Untergrund eintritt.

15. Fahrzeugluftreifen mit einem Laufstreifen mit Profilblöcken (2) mit zumindest zwei parallel zueinander verlaufenden, den jeweiligen Profilblock (2) durchquerenden Einschnitten (11) nach einem der Ansprüche 1 bis 14, **dadurch gekennzeichnet,**
**dass** das zwischen zwei durchquerenden Einschnitten (11) befindliche Blocksegment (2c) mit Mikrorillen (12) versehen ist, welche in Draufsicht parallel zur Mittelinie (m₁) des bzw. jedes im selben Profilblock (1, 2) verlaufenden Einschnittes (7, 11) verlaufen.

## Claims

1. Pneumatic vehicle tyre having a tread with profile blocks (1, 2), with in each case one or more sipe(s) (7, 11), which are aligned parallel to one another, run at an angle of from 0° to 50° to the axial direction, cross through the respective profile block (1, 2) and have a width of 0.4 mm to 0.8 mm and a depth of 65% to 100% of the profile depth,
wherein the sipes (7, 11) divide the profile blocks (1, 2) into block segments (1a, 1b, 2a, 2b, 2c), so that each profile block (1, 2) has two edge-side block segments (1a, 1b, 2a, 2b),
wherein the edge-side block segments (1a, 1b, 2a, 2b) are in each case provided with a number of micro-grooves (8, 9, 12, 14), which run parallel to one another within the block segment (1a, 1b, 2a, 2b), are made shallower than the sipes (7, 11) and have a width and a depth of in each case 0.1 mm to 0.8 mm,
wherein profile blocks (1, 2) in the case of which one edge-side block segment (1b, 2b) is a narrow block segment (1b, 2b) and the other edge-side block segment (1a, 2a) is a wide block segment (1a, 2a), made wider than the narrow block segment (1b, 2b), are provided,
**characterized**
**in that** the micro-grooves (9) run in the narrow block segments (1b, 2b) at an angle (β) of 50° to 90° - relative to the centre line (m₁) of the or each sipe (7, 11) running in the same profile block (1, 2) - and the micro-grooves (8, 12, 14) run in the wide block segments (1b, 2b) at an angle (α) of 0° to 35° - relative to the centre line (m₁) of the or each sipe (7, 11) running in the same profile block (1, 2).

2. Pneumatic vehicle tyre according to Claim 1, **characterized in that** all of the micro-grooves (8, 9, 12, 14) run without crossing the sipes (7, 11).

3. Pneumatic vehicle tyre according to Claim 1 or 2, **characterized in that** micro-grooves (8, 14) running next to one another within a wide block segment (1a, 2a) are at a distance (a₁) from one another that is less than the distance (a₂) that micro-grooves (9) running next one another within a narrow block segment (1b, 2b) are from one another.

4. Pneumatic vehicle tyre according to Claim 3, **characterized in that** the distance (a₁) that micro-grooves (8, 14) running next one another within a wide block segment (1a, 2a) are from one another is 0.7 mm to 1.5 mm.

5. Pneumatic vehicle tyre according to Claim 3, **characterized in that** the distance (a₂) that micro-grooves (9, 12) running next one another within a narrow block segment (1b, 2b) are from one another is 3.0 mm to 6.0 mm.

6. Pneumatic vehicle tyre according to one of Claims 1 to 5, **characterized in that** micro-grooves (8) which run within a wide block segment (1a, 2a) parallel to the centre line (m₁) of the or each sipe (7, 11) running in the same profile block (1, 2) and cross through the block segment (1a, 2a) are provided.

7. Pneumatic vehicle tyre according to one of Claims 1 to 6, **characterized in that** micro-grooves (14) which run within a wide block segment (2a) of a middle profile block (2) at an angle (α) of 10° to 30° to the centre line (m₁) of the or each sipe (7) running in the same profile block (1, 2) are provided.

8. Pneumatic vehicle tyre according to one of Claims 1 to 7, **characterized in that** micro-grooves (9) which run within a narrow block segment (1b, 2b) and end at a minimum distance (aₘᵢₙ) of at least 0.5 mm before the centre line (m₁) of the or each sipe (7) running in the same profile block (1, 2) are provided.

9. Pneumatic vehicle tyre according to one of Claims 1 to 8, **characterized in that** micro-grooves (9) which run within a narrow block segment (1b) of a shoulder-side profile block (1) at an angle (β) of 50° to 60°, in particular of 52° to 58°, relative to the centre line (m₁) of the or each sipe (7) running in the same profile block, are provided.

10. Pneumatic vehicle tyre according to one of Claims 1 to 9, **characterized in that** micro-grooves (9) which run within a narrow block segment (2b) of a middle profile block (2) at an angle (β) of 75° to 90°, in particular of 80° to 90°, relative to the centre line (m₁) of the or each sipe (7) running in the same profile block (2), are provided.

11. Pneumatic vehicle tyre according to one of Claims 1 to 10, **characterized in that** in wide block segments (1a, 2a) between adjacently running micro-grooves (8) there is or are formed at least one sipe, in particular at least two sipes (10, 13), arranged one behind the other and ending within the wide block segment (1a, 2a), with a depth of 65% to 100% of the profile depth.

12. Pneumatic vehicle tyre according to Claim 11, **characterized in that** the sipe or sipes (10, 13), ending within the wide block segment (1a, 2a), are made up of a middle portion (10a, 13a) with a constant width of 0.4 mm to 0.8 mm and two edge-side portions (10b, 13b) with a width increasing towards the respective free end, wherein the width of the edge-side portions (10b, 13b) at their widest point is in particular 150% to 300% of the width of the middle portion (10a, 13a).

13. Pneumatic vehicle tyre according to one of Claims 1 to 12, **characterized in that** the micro-grooves (8, 9, 12, 14) in plan view run straight or at least partly in a wave-shaped or zigzag-shaped form.

14. Pneumatic vehicle tyre according to one of Claims 1 to 13, **characterized in that** the tread is of a directional design, wherein, when the tyre rolls during forward travel, the edge-side, wide block segment (1a, 2a) meets the ground before the edge-side, narrow block segment (1b, 2b).

15. Pneumatic vehicle tyre having a tread with profile blocks (2) with at least two sipes (11) running parallel to one another and crossing the respective profile block (2) according to one of Claims 1 to 14, **characterized in that** the block segment (2c) located between two crossing sipes (11) is provided with micro-grooves (12), which in plan view run parallel to the centre line (m₁) of the or each sipe (7, 11) running in the same profile block (1, 2).

## Revendications

1. Pneumatique de véhicule comprenant une bande de roulement qui comporte des blocs de sculpture (1, 2) pourvus chacun d'une ou plusieurs incisions (7, 11) orientées parallèlement les unes aux autres, s'étendant suivant un angle de 0° à 50° par rapport à la direction axiale, traversant le bloc de sculpture respectif (1, 2) et ayant une largeur de 0,4 mm à 0,8 mm et une profondeur de 65 % à 100 % de la profondeur de sculpture,
les incisions (7, 11) divisant les blocs de sculpture (1, 2) en segments de bloc (1a, 1b, 2a, 2b, 2c) de sorte que chaque bloc de sculpture (1, 2) comporte deux segments de bloc côté bord (1a, 1b, 2a, 2b),
les segments de bloc côté bord (1a, 1b, 2a, 2b) étant pourvus chacun d'un certain nombre de micro-rainures (8, 9, 12, 14) qui s'étendent parallèlement les unes aux autres à l'intérieur du segment de bloc (1a, 2a, 1b, 2b), qui sont moins profondes que les incisions (7, 11), et qui ont chacune une largeur et une profondeur de 0,1 mm à 0,8 mm,
des blocs de sculpture (1, 2) étant prévus dans lesquels l'un des segments de bloc côté bord (1b, 2b) est un segment de bloc étroit (1b, 2b) et l'autre des segments de bloc côté bord (1a, 2a) est un segment de bloc large (1a, 2a) qui est plus large que le segment de bloc étroit (1b, 2b),
**caractérisé en ce que**
les micro-rainures (9) ménagées dans les segments de bloc étroits (1b, 2b) s'étendent, par rapport à la ligne médiane (m₁) de l'incision ou de chaque incision (7, 11) s'étendant dans le même bloc de sculpture (1, 2), avec un angle (β) de 50° à 90° et les micro-rainures (8, 12, 14) ménagées dans les segments de bloc larges (1b, 2b) s'étendent avec un angle (α) de 0° à 35° par rapport à la ligne médiane (m₁) de l'incision ou de chaque incision (7, 11) s'étendant dans le même bloc de sculpture (1,2).

2. Pneumatique de véhicule selon la revendication 1, **caractérisé en ce que** toutes les micro-rainures (8, 9, 12, 14) s'étendent sans se croiser jusqu'aux incisions (7, 11).

3. Pneumatique de véhicule selon la revendication 1 ou 2, **caractérisé en ce que**, à l'intérieur d'un segment de bloc large (1a, 2a), des micro-rainures (8, 14) s'étendant les unes à côté des autres sont à une distance (a₁) les unes des autres qui est inférieure à la distance (a₂) qui comportent des micro-rainures (9) s'étendant les unes à côté des autres à l'intérieur d'un segment de bloc étroit (1b, 2b).

4. Pneumatique de véhicule selon la revendication 3, **caractérisé en ce que** la distance (a₁) qui comporte des micro-rainures (8, 14) s'étendant les unes à côté des autres à l'intérieur d'un segment de bloc large (1a, 2a), est de 0,7 mm à 1,5 mm.

5. Pneumatique de véhicule selon la revendication 3, **caractérisé en ce que** la distance (a₂), qui comportent des micro-rainures (9, 12) s'étendant les unes à côté des autres à l'intérieur d'un segment de bloc étroit (1b, 2b), est de 3,0 mm à 6,0 mm.

6. Pneumatique de véhicule selon l'une des revendications 1 à 5, **caractérisé en ce que** des micro-rainures (8) sont prévues qui s'étendent à l'intérieur d'un segment de bloc large (1a, 2a) parallèlement à la ligne médiane (m₁) de l'incision ou de chaque incision (7, 11) s'étendant dans le même bloc de sculpture (1, 2) et qui traversent le segment de bloc (1a, 2a).

7. Pneumatique de véhicule selon l'une des revendications 1 à 6, **caractérisé en ce que** des micro-rainures (14) sont prévues qui s'étendent avec un angle (α) de 10° à 30° par rapport à la ligne médiane (m₁) de l'incision ou de chaque incision (7) s'étendant dans le même bloc de sculpture (1, 2) à l'intérieur d'un segment de bloc large (2a) d'un bloc de sculpture médian (2).

8. Pneumatique de véhicule selon l'une des revendications 1 à 7, **caractérisé en ce que** des micro-rainures (9) sont prévues qui s'étendent à l'intérieur d'un segment de bloc étroit (1b, 2b) et qui se terminent à une distance minimale (aₘᵢₙ) d'au moins 0,5 mm avant la ligne médiane (m₁) de l'incision ou d'une incision (7) s'étendant dans le même bloc de sculpture (1, 2).

9. Pneumatique de véhicule selon l'une des revendications 1 à 8, **caractérisé en ce que** des micro-rainures (9) sont prévues qui s'étendent avec un angle (β) de 50° à 60°, notamment de 52° à 58° par rapport à la ligne médiane (m₁) de l'incision ou de chaque incision (7) à l'intérieur d'un segment de bloc étroit (1b) d'un bloc de sculpture côté épaulement (1).

10. Pneumatique de véhicule selon l'une des revendications 1 à 9, **caractérisé en ce que** des micro-rainures (9) sont prévues qui s'étendent avec un angle (β) de 75° à 90°, notamment de 80° à 90°, par rapport à la ligne médiane (m₁) de l'incision ou de chaque incision (7) s'étendant dans le même bloc de sculpture (2) à l'intérieur d'un segment de bloc étroit (2b) d'un bloc de sculpture médian (2).

11. Pneumatique de véhicule selon l'une des revendications 1 à 10, **caractérisé en ce qu'**au moins une incision, notamment au moins deux incisions (10, 13), lesquelles sont disposées l'une derrière l'autre et se terminent à l'intérieur du segment de bloc large (1a, 2a), sont formées avec une profondeur de 65 % à 100 % de la profondeur de sculpture dans des segments de blocs larges (1a, 2a) entre des micro-rainures (8) adjacentes.

12. Pneumatique de véhicule selon la revendication 11, **caractérisé en ce que** l'incision ou les incisions (10, 13), se terminant à l'intérieur du segment de bloc large (1a, 2a), se composent d'une portion médiane (10a, 13a) ayant une largeur constante de 0,4 mm à 0,8 mm et de deux portions côté bord (10b, 13b) ayant une largeur croissante en direction de l'extrémité libre respective, la largeur des portions côté bord (10b, 13b) à leur point le plus large étant notamment de 150 % à 300 % de la largeur de la portion médiane (10a, 13a).

13. Pneumatique de véhicule selon l'une des revendications 1 à 12, **caractérisé en ce que** les micro-rainures (8, 9, 12, 14) s'étendent en vue de dessus de manière rectiligne ou au moins par portions en forme d'ondulation ou de zigzag.

14. Pneumatique de véhicule selon l'une des revendications 1 à 13, **caractérisé en ce que** la bande de roulement est conçue pour être directionnelle, le segment de bloc large côté bord (1a, 2a) pénétrant dans le sol avant le segment de bloc étroit côté bord (1b, 2b) lorsque le pneumatique roule vers l'avant.

15. Pneumatique de véhicule comprenant une bande de roulement qui comporte des blocs de sculpture (2) pourvus d'au moins deux incisions (11), s'étendant parallèlement l'une à l'autre et traversant le bloc de sculpture respectif (2), selon l'une des revendications 1 à 14, **caractérisé en ce que**
le segment de bloc (2c) situé entre deux incisions traversantes (11) est pourvu de micro-rainures (12) qui s'étendent en vue de dessus parallèlement à la ligne médiane (m₁) de l'incision ou de chaque incision (7, 11) s'étendant dans le même bloc de sculpture (1, 2).
